# EUROPÄISCHE PATENTSCHRIFT

(11) **EP 2 918 004 B1**
(45) Veröffentlichungstag und Bekanntmachung des Hinweises auf die Patenterteilung: **29.05.2019**
(21) Anmeldenummer: 13786164.7
(22) Anmeldetag: 28.10.2013
(51) Int. Cl.: H02K 11/00, H02K 11/01, H02K 19/38, H01F 38/18, H02K 3/52

(54) **ELEKTROMOTOR**
ELECTRIC MOTOR
MOTEUR ÉLECTRIQUE

(30) Priorität: 06.11.2012 DE 102012021600
(43) Veröffentlichungstag der Anmeldung: 16.09.2015
(73) Patentinhaber: SEW-EURODRIVE GmbH & Co. KG, 76646 Bruchsal (DE)
(72) Erfinder: REINHARDT, Volkmar, 69124 Heidelberg (DE); MEGERLE, Thomas, 76646 Graben-Neudorf (DE)
(86) Internationale Anmeldenummer: PCT/EP2013/003232
(87) Internationale Veröffentlichungsnummer: WO 2014/072029

(56) Entgegenhaltungen:
- EP-A1- 2 104 207
- DE-A1- 19 507 760
- DE-A1-102005 047 451
- DE-A1-102008 040 318
- RU-C1- 2 050 671
- US-A- 4 041 541

## Beschreibung

Die vorliegende Erfindung betrifft einen Elektromotor.

Der Aufbau einer Synchronmaschine mit bürstenloser Erregung ist aus "Elektrische Maschinen", Rolf Fischer, 15. Auflage, 2011, Seite 295 bekannt. Derartige Maschinen kommen in Verbindung mit Frequenzumrichtern als drehzahlregelbare Antriebe in einem weiten Leistungsbereich zur Anwendung. Um eine kompakte Bauweise zu erhalten, wird der Erregergenerator mit auf die Motorwelle gebaut und damit in das Gehäuse der Synchronmaschine einbezogen. Das ganze Erregersystem ist damit von außen nicht mehr erkennbar.

Aus der DE 10 2005 029 599 B3 ist ein System zur berührungslosen Energieübertragung bekannt. Aus der WO 2010/105764 A1 ist ein Drehübertrager und eine fremderregte Synchronmaschine bekannt. Dabei ist der Drehübertrager in einem anderen axialen Bereich von der Erregerwicklung des Rotors beabstandet angeordnet.

Aus der US 2 722 652 A ist ein Anregungssystem für elektrische Maschinen bekannt.

Aus der RU 2 050 671 C1 ist die Eliminierung von Fehlern bei einem rotierenden Gleichrichtern bekannt.

Aus der DE 195 07 760 A1 ist ein Verfahren zur Übertragung eines Datenwerts zwischen einem fest stehenden und einem rotierenden Kommunikationsmodul bekannt.

Aus der DE 10 2008 040 318 A1 ist eine Antriebseinheit mit einer mittels eines Wälzlagers gelagerten Antriebswelle bekannt.

Aus der EP 2 104 207 A1 ist ein Verfahren für Erwärmung einer Statorspule bekannt.

Aus der US 4 041 541 A ist als nächstliegender Stand der Technik ein Steuerungssystem für rotatorische Maschinen bekannt.

Aus der US 3 522 520 A ist ein DC/AC-Wandler mit Drehübertrager für Selbsterregung bekannt.

Aus der DE 10 2005 047 451 A1 ist eine Synchronmaschine bekannt.

Der Erfindung liegt die Aufgabe zu Grunde, einen Elektromotor mit einem Drehübertrager möglichst zu verbessern.

Diese Aufgabe wird durch einen Elektromotor mit den Merkmalen des unabhängigen Anspruchs 1 gelöst. Vorteilhafte Weiterbildungen sind Gegenstand von abhängigen Ansprüchen und in der Beschreibung enthalten.

Demzufolge ist ein Elektromotor mit einem Gehäuse, mit einem Stator, mit einem Rotor und mit einem Drehübertrager vorgesehen.

Der Drehübertrager weist eine primärseitige erste Vorrichtung mit einer Primärwicklung und eine sekundärseitige zweite Vorrichtung mit einer Sekundärwicklung auf.

Das Gehäuse weist eine erste Aufnahme zur Positionierung der primärseitigen ersten Vorrichtung auf.

Die primärseitige erste Vorrichtung weist eine Anzahl erster Befestigungsstellen zur kraftschlüssigen und/oder formschlüssigen Befestigung an dem Gehäuse auf.

Der Rotor weist eine zweite Aufnahme zur Positionierung der sekundärseitigen zweiten Vorrichtung auf.

Die sekundärseitige zweite Vorrichtung weist eine Anzahl zweiter Befestigungsstellen zur kraftschlüssigen und/oder formschlüssigen Befestigung an dem Rotor auf.

Der Rotor weist eine erste Anschlussvorrichtung und die sekundärseitige zweite Vorrichtung weist eine zweite Anschlussvorrichtung zur elektrischen Verbindung des Rotors mit der sekundärseitigen zweiten Vorrichtung auf. Die erste Anschlussvorrichtung weist erste elektrische Kontaktglieder und die zweite Anschlussvorrichtung weist zweite elektrische Kontaktglieder zur lösbaren Leitungsverbindung mittels Formschluss und/oder Kraftschluss auf.

Untersuchungen der Anmelderin haben gezeigt, dass durch die mechanische Aufnahme der Rotor und die sekundärseitige zweite Vorrichtung des Drehübertragers getrennt optimiert werden können. Dabei wird der Vorteil erzielt, dass der separat gefertigte Drehübertrager in einem Bereich des Rotors, der als Rotorendkappe bezeichnet werden kann, austauschbar ist, um beispielsweise eine verbesserte Schaltung im Drehübertrager vorzusehen. Die kraftschlüssige und/oder formschlüssige Befestigung kann durch unterschiedliche Befestigungsmittel, wie Klemmen, Schrauben etc. bewirkt werden.

Ein weiterer Aspekt der Erfindung ist ein Elektromotor mit den Merkmalen des Anspruchs 1. Vorteilhafte Weiterbildungen sind Gegenstand von abhängigen Ansprüchen und in der Beschreibung enthalten.

Demzufolge ist ein Elektromotor mit einem Gehäuse, mit einem Stator, mit einem Rotor und mit einem Drehübertrager vorgesehen.

Der Drehübertrager weist eine primärseitige erste Vorrichtung mit einer Primärwicklung und eine sekundärseitige zweite Vorrichtung mit einer Sekundärwicklung zur Stromspeisung des Rotors auf.

Der Elektromotor weist ein Mittel zur Ausbildung eines Wärmewiderstands für einen Wärmestrom vom Rotor zur sekundärseitigen zweiten Vorrichtung auf, so dass eine Wärmeleitfähigkeit zwischen dem Rotor und der sekundärseitigen zweiten Vorrichtung signifikant verkleinert ist. Der Wärmestrom vom Rotor zur sekundärseitigen zweiten Vorrichtung wird signifikant reduziert.

Die im Folgenden beschriebenen Weiterbildungen beziehen sich auf beide Aspekte und auf die Kombination beider Aspekte der Erfindung.

Gemäß einer vorteilhaften Ausgestaltung sind die ersten Befestigungsstellen und/oder die zweiten Befestigungsstellen zur zerstörungsfrei lösbaren Befestigung ausgebildet. Vorteilhafterweise sind die ersten Befestigungsstellen und/oder die zweiten Befestigungsstellen als Öffnungen zur Schraubbefestigung ausgebildet. Dies kann beispielsweise nach Art einer Flanschbefestigung erfolgen. Die zerstörungsfrei lösbare Befestigung ermöglicht einen einfachen und schnellen Austausch der Komponenten.

Bevorzugt weist das Gehäuse eine verschließbare Öffnung zur Einbringung und Entnahme des Drehübertragers auf. Durch die verschließbare Öffnung kann der Drehübertrager zumindest teilweise in das Gehäuse eingebracht werden und wird von dem Gehäuse vor Beschädigungen geschützt.

In einer vorteilhaften Weiterbildung ist die zweite Aufnahme des Rotors zur Positionierung der sekundärseitigen zweiten Vorrichtung als Zentriersitz ausgebildet. Der Zentriersitz weist vorzugsweise eine zylindrische oder alternativ konische oder doppelkonische Kontaktfläche auf. Mittels des Zentriersitzes kann eine besonders genaue Positionierung der sekundärseitigen zweiten Vorrichtung zum Rotor erfolgen.

Gemäß einer bevorzugten Weiterbildung weist die sekundärseitige zweite Vorrichtung einen Bund auf. Vorzugsweise ist der Bund um die sekundärseitige zweite Vorrichtung umlaufend ausgebildet. Vorzugsweise definiert der Bund mit einer zugehörigen Kante des Rotors die Position der sekundärseitigen zweiten Vorrichtung in axialer Richtung. Bei der Montage der sekundärseitigen zweiten Vorrichtung bilden der Bund und die Kante einen Anschlag.

Vorzugsweise ist der Bund derart angeordnet, dass eine dem Rotor zugewandte Wandung der sekundärseitigen zweiten Vorrichtung vom Rotor beabstandet ist. Somit haben der Rotor und die sekundärseitige zweite Vorrichtung nur im Bereich des Zentriersitzes Kontakt.

Gemäß einer vorteilhaften Ausgestaltung weist die erste Anschlussvorrichtung eine erste Isolationsvorrichtung auf. Die erste Isolationsvorrichtung ist in einer dem Drehübertrager zugewandten Wandung des Rotors befestigt und zur elektrischen Isolation und Positionierung der ersten elektrischen Kontaktglieder ausgebildet.

Gemäß einer vorteilhaften Ausgestaltung weist die zweite Anschlussvorrichtung eine zweite Isolatorvorrichtung auf. Die zweite Isolatorvorrichtung ist in einer dem Rotor zugewandten Wandung der sekundärseitigen zweiten Vorrichtung befestigt und zur elektrischen Isolation und Positionierung der zweiten elektrischen Kontaktglieder ausgebildet.

Die elektronischen Kontaktglieder sind vorzugsweise für eine zerstörungsfrei lösbare elektrisch leitende Verbindung ausgebildet. Ein Kontaktglied ist beispielsweise ein Stecker, eine Schraube, eine Klemme oder eine Kupplung.

In einer Ausgestaltung weist die sekundärseitige zweite Vorrichtung eine Schaltung auf. Vorteilhafterweise ist die Schaltung an die Sekundärwicklung angeschlossen. Vorteilhafterweise ist die Schaltung an die zweiten Kontaktglieder angeschlossen. Vorteilhafterweise ist eine Rotorwicklung des Rotors an die ersten Kontaktglieder angeschlossen.

Gemäß einer bevorzugten Ausgestaltung weist der Elektromotor ein Mittel zur Ausbildung eines Wärmewiderstands für einen Wärmestrom vom Rotor zur sekundärseitigen zweiten Vorrichtung auf. Das Mittel ist beispielsweise ein Wärme-isolierendes Material. Bevorzugt ist als Mittel zur Ausbildung des Wärmewiderstands ein Hohlraum ausgebildet. Vorteilhafterweise ist der Hohlraum ein Luftspalt. Alternativ kann der Hohlraum auch mit einem anderen Gas gefüllt sein.

Der Wärmewiderstand kann konstruktiv beispielsweise im Rotor oder in der sekundärseitigen zweiten Vorrichtung ausgebildet sein. Bevorzugt ist jedoch vorgesehen, dass das Mittel zur Ausbildung des Wärmewiderstands zwischen dem Rotor und der sekundärseitigen zweiten Vorrichtung des Drehübertragers ausgebildet ist. Beispielsweise ist ein Hohlraum als Wärmewiderstand bei einer Demontage der sekundärseitigen zweiten Vorrichtung zugänglich. Bevorzugt ist das Mittel durch eine dem Rotor zugewandte Wandung der sekundärseitigen zweiten Vorrichtung und eine der sekundärseitigen zweiten Vorrichtung zugewandte Wandung des Rotors begrenzt.

Gemäß einer vorteilhaften Weiterbildung ist vorgesehen, dass der Rotor eine Schirmungsvorrichtung zur Erhöhung der magnetischen Schirmung von Magnetfeldern in Richtung der sekundärseitigen zweiten Vorrichtung des Drehübertragers aufweist. Die Schirmungsvorrichtung ist vorzugsweise aus einem weichmagnetischen Werkstoff gebildet. Vorzugsweise bildet die Schirmungsvorrichtung in Synergie eine Wandung des Rotors, wobei die Wandung der sekundärseitigen zweiten Vorrichtung des Drehübertragers zugewandt ist.

Die zuvor beschriebenen Weiterbildungsvarianten sind sowohl einzeln als auch in Kombination besonders vorteilhaft. Dabei können sämtliche Weiterbildungsvarianten untereinander kombiniert werden. Einige mögliche Kombinationen sind in der Beschreibung der Ausführungsbeispiele der Figuren erläutert. Diese dort dargestellten Möglichkeiten von Kombinationen der Weiterbildungsvarianten sind jedoch nicht abschließend.

Im Folgenden wird die Erfindung durch Ausführungsbeispiele anhand zeichnerischer Darstellungen näher erläutert. Funktionsgleiche Teile sind bei den verschiedenen Beispielen mit den gleichen Bezugszeichen bezeichnet.

### Dabei zeigen

- Fig. 1: schematische Prinzipzeichnung eines Ausführungsbeispiels eines Elektromotors,
- Fig. 2: eine schematische Schnittansicht eines Ausführungsbeispiels mit einem Rotor und einem sekundärseitigen Vorrichtung eines Drehübertragers im montierten Zustand,
- Fig. 3: eine schematische Schnittansicht eines Ausführungsbeispiels mit einem Rotor und einer sekundärseitigen Vorrichtung eines Drehübertragers im getrennten Zustand,
- Fig. 4: eine schematische Draufsicht auf eine sekundärseitige Vorrichtung eines Drehübertragers eines weiteren Ausführungsbeispiels,
- Fig. 5: eine schematische Ansicht eines Schnitts durch einen Elektromotor eines weiteren Ausführungsbeispiel, und
- Fig. 6: eine Detailansicht zum Ausführungsbeispiel von Fig. 5.

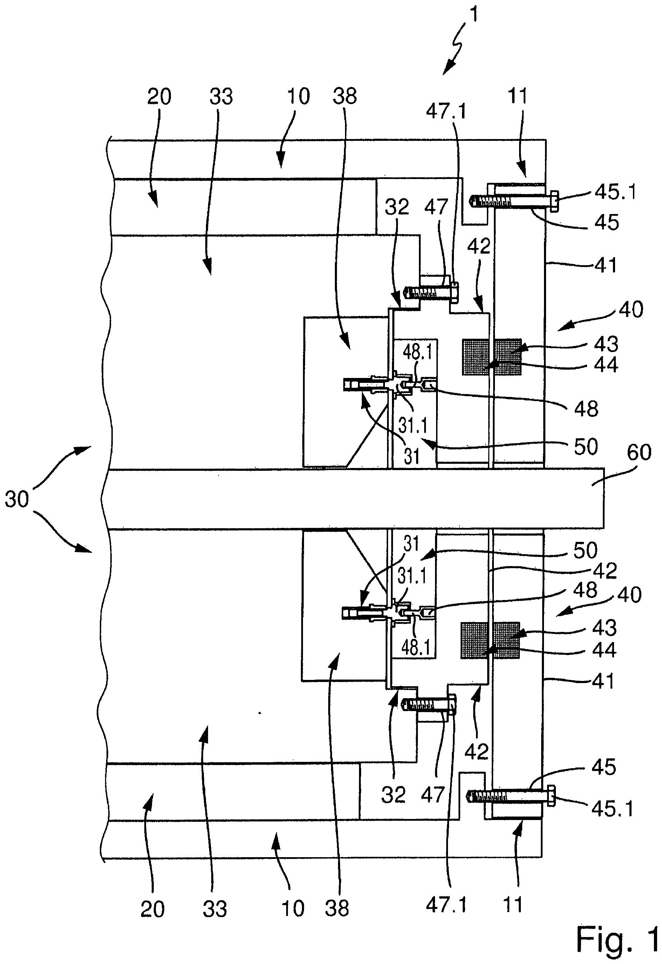

Fig. 1 zeigt eine schematische Prinzipzeichnung eines Elektromotors 1. Der Elektromotor 1 weist ein Gehäuse 10 auf, in dem weiteren Einheiten des Elektromotors 1 angeordnet sind. Der Elektromotor 1 weist ein bewickeltes Statorblechpaket 20 als Stator 20 auf, der am Gehäuse 10 befestigt ist. Weiterhin weist der Elektromotor 1 einen Rotor 30 mit einem Rotorblechpaket 33 auf. Das Rotorblechpaket 33 ist mit einer Welle 60 drehfest verbunden. Der Rotor 30 weist eine Rotorwicklung 38 auf. Der Elektromotor 1 weist zudem einen Drehübertrager 40 auf. Mittels eines Ausgangsstroms des Drehübertragers 40 wird die Rotorwicklung 38 bestromt.

Im Folgenden wird ein Ausführungsbeispiel für einen fremderregten Synchronmotor 1 erläutert. Die Erfindung ist jedoch auch für andere Elektromotortypen mit Rotorwicklung 38 verwendbar. Im Ausführungsbeispiel der Fig. 1 weist der Drehübertrager 40 eine primärseitige erste Vorrichtung 41 mit einer Primärwicklung 43 und eine sekundärseitige zweite Vorrichtung 42 mit einer Sekundärwicklung 44 auf. Die primärseitige erste Vorrichtung 41 ist dabei mit dem Gehäuse 10 drehfest verbunden. Die sekundärseitige zweite Vorrichtung 42 ist mit dem Rotor 30 drehfest verbunden. Die sekundärseitige zweite Vorrichtung 42 ist gegenüber der primärseitigen ersten Vorrichtung 41 drehbar ausgebildet.

Das Gehäuse 10 weist eine erste Aufnahme 11 für die primärseitige erste Vorrichtung 41 auf. Die erste Aufnahme 11 ist an die Form der primärseitigen ersten Vorrichtung 41 angepasst. Durch die erste Aufnahme 11 kann die primärseitige erste Vorrichtung 41 zum Gehäuse 10 positioniert werden. Die primärseitige erste Vorrichtung 41 weist eine Anzahl erster Befestigungsstellen 45 zur Befestigung an dem Gehäuse 10 auf. Im Ausführungsbeispiel der Fig. 1 sind die ersten Befestigungsstellen Schraublöcher 45. Die primärseitige erste Vorrichtung 41 ist in (bezogen auf die Welle 60) axialer Richtung durch die Schraubbefestigung an dem Gehäuse 10 fixiert. Die Befestigung ist mittels der Schrauben 45.1 und zugehörigen Gewinden im Gehäuse 10 zerstörungsfrei lösbar. Andere kraftschlüssige und/oder formschlüssige Befestigungen wie beispielsweise Klemmung können verwendet werden.

Der Rotor 30 weist eine zweite Aufnahme 32 für die sekundärseitige zweite Vorrichtung 42 auf. Die zweite Aufnahme 32 ist an die Form der sekundärseitigen zweiten Vorrichtung 42 angepasst. Durch die zweite Aufnahme 32 kann die sekundärseitige zweite Vorrichtung 42 zum Rotor 30 positioniert werden. Die sekundärseitige zweite Vorrichtung 42 weist eine Anzahl zweiter Befestigungsstellen 47 zur Befestigung an dem Rotor 30 auf. Im Ausführungsbeispiel der Fig. 1 sind die zweiten Befestigungsstellen 47 Schraublöcher. Die sekundärseitige zweite Vorrichtung 42 ist durch die Schraubbefestigung mit dem Rotor 30 drehfest verbunden. Die Befestigung ist mittels der Schrauben 47.1 und zugehörigen Gewinden im Rotor 30 zerstörungsfrei lösbar. Andere kraftschlüssige und/oder formschlüssige Befestigungen wie beispielsweise Klemmung können verwendet werden.

Der Rotor 30 weist im Ausführungsbeispiel der Fig. 1 eine elektrische erste Anschlussvorrichtung 31 auf. Die elektrische erste Anschlussvorrichtung ist im Ausführungsbeispiel der Fig. 1 eine weibliche Steckverbindung 31. Alternativ ist eine andere elektrische erste Anschlussvorrichtung 31 beispielsweise mit einem elektrischen Schraubanschluss vorgesehen. Die sekundärseitige zweite Vorrichtung 42 weist eine elektrische zweite Anschlussvorrichtung 48 auf. Die elektrische zweite Anschlussvorrichtung ist im Ausführungsbeispiel der Fig. 1 eine männliche Steckverbindung 48. Alternativ ist eine andere elektrische zweite Anschlussvorrichtung 48 beispielsweise mit einem elektrischen Schraubanschluss vorgesehen. Die elektrische erste Anschlussvorrichtung 31 und die elektrische zweite Anschlussvorrichtung 48 sind zur elektrischen Verbindung der Rotorwicklung 38 des Rotors 30 mit der sekundärseitigen zweiten Vorrichtung 42 ausgebildet. Die erste Anschlussvorrichtung 31 weist erste elektrische Kontaktglieder 31.1 auf. Im Ausführungsbeispiel der Fig. 1 sind die ersten elektrischen Kontaktglieder metallische Buchsen 31.1. Die zweite Anschlussvorrichtung 48 weist zweite elektrische Kontaktglieder 48.1 auf. Im Ausführungsbeispiel der Fig. 1 sind die zweiten elektrischen Kontaktglieder metallische Stecker 48.1. Die elektrischen Kontaktglieder 31.1, 48.1 sind zur lösbaren Leitungsverbindung mittels Formschluss und/oder Kraftschluss ausgebildet. Über die Anschlussvorrichtungen 31, 48 ist der Drehübertrager 40 zur Stromspeisung des Rotors 30 verbunden.

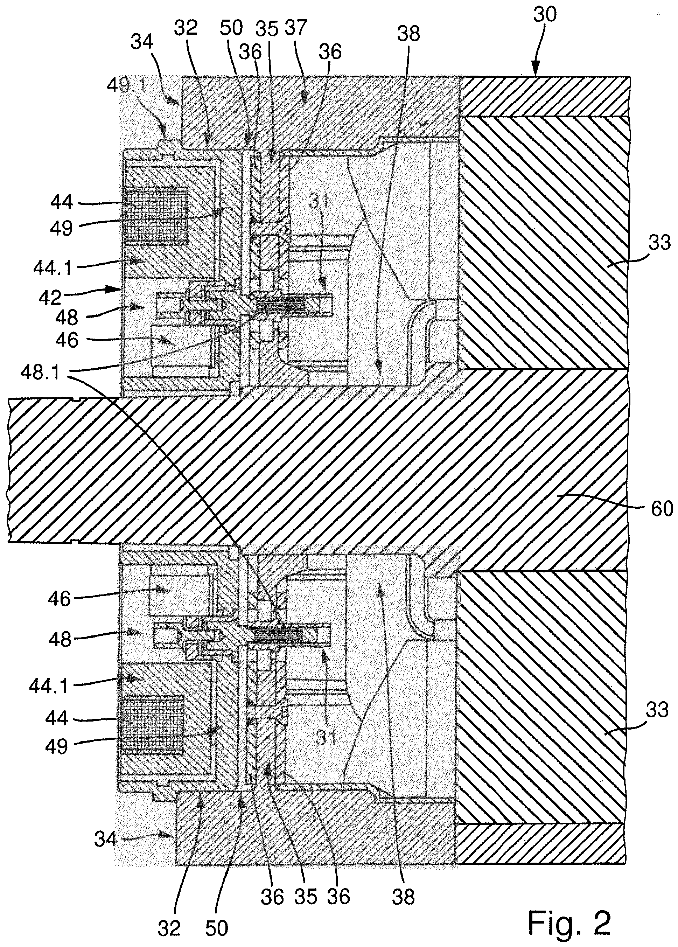

Im Ausführungsbeispiel der Fig. 1 ist ein Mittel 50 zur Ausbildung eines Wärmewiderstands für einen Wärmestrom vom Rotor 30 zur sekundärseitigen zweiten Vorrichtung 42 vorgesehen. Im konstruktiv einfachsten Fall ist das Mittel ein Luftspalt 50. Alternativ wird ein Wärme isolierendes Material eingebracht. Das Mittel 50 zur Ausbildung des Wärmewiderstands kann im Rotor 30 und/oder in der sekundärseitigen zweiten Vorrichtung 42 und/oder - wie im Ausführungsbeispiel der Fig. 2 - zwischen dem Rotor 30 und der sekundärseitigen Vorrichtung 42 ausgebildet sein. Durch das Mittel 50 zur Ausbildung des Wärmewiderstands ist eine Wärmeleitfähigkeit zwischen dem Rotor 30 und der sekundärseitigen zweiten Vorrichtung 42 kleiner als eine Wärmeleitfähigkeit zwischen dem Rotor 30 und dem Gehäuse 10. Dabei gelangt die Wärmeenergie vom Rotor 30 vorwiegend über den Stator 20 zum Gehäuse 10.

Fig. 2 zeigt ein weiteres Ausführungsbeispiel mit einem Rotor 30 und einer sekundärseitigen zweiten Vorrichtung 42 in Schnittdarstellung mit einem Schnitt durch die Anschlussvorrichtungen 31, 48. Dargestellt ist in Fig. 2 der Zustand, bei dem die sekundärseitige zweite Vorrichtung 42 an dem Rotor 30 befestigt ist. Ein Bereich 37 des Rotors 30, der zur Aufnahme der sekundärseitigen zweiten Vorrichtung 42 dient, kann auch als Rotorendkappe 37 bezeichnet werden. Der Rotor 30 weist in der Rotorendkappe 37 eine Aufnahme 32 auf, die als Zentriersitz 32 ausgebildet ist. In diesem Zentriersitz 32 ist die sekundärseitige zweite Vorrichtung 42 zentriert.

Eine Wandung 49 der sekundärseitigen zweiten Vorrichtung 42 weist einen umlaufenden Bund 49.1 auf, der im befestigten Zustand an eine Kante 34 des Rotors 30 anschlägt. Der Bund 49.1 ist dabei derart in der Wandung 49 positioniert, dass im befestigten Zustand zwischen der Wandung 49 der sekundärseitigen zweiten Vorrichtung 42 und einer Wandung 35 des Rotors 30 ein Luftspalt 50 als Wärmewiderstand entsteht, so dass die im Rotor 30 entstehende Wärmeenergie vorrangig in radialer Richtung abgegeben wird. Im Ausführungsbeispiel der Fig. 2 ist der Luftspalt 50 geschlossen. Es findet daher kein oder nur in geringfügigem Umfang ein Luftaustausch mit der Luft im Luftspalt 50 statt. Eine Schaltung 46 ist in der sekundärseitigen zweiten Vorrichtung 42 angeordnet. Leistungsbauelemente der Schaltung 46 weisen im Ausführungsbeispiel der Fig. 2 eine thermische Kopplung zur Wandung 49 auf. Die Wandung 49 weist eine Dicke zur Ausbildung einer thermischen Kapazität für die Leistungsbauelemente der Schaltung 46 auf. Hiermit wird die höhere Wärmeentwicklung beispielsweise von Gleichrichterhalbleiter bei Leistungsspitzen gepuffert. Die örtliche Nähe der thermischen Kapazität 49 bewirkt den Vorteil, dass die Wärmeabgabe des Übertragers 40 vorrangig radial erfolgt. Auch kann eine Wärmeabgabe über einen Luftspalt 50 langsam erfolgen z.B. vorrangig über Wärmestrahlung.

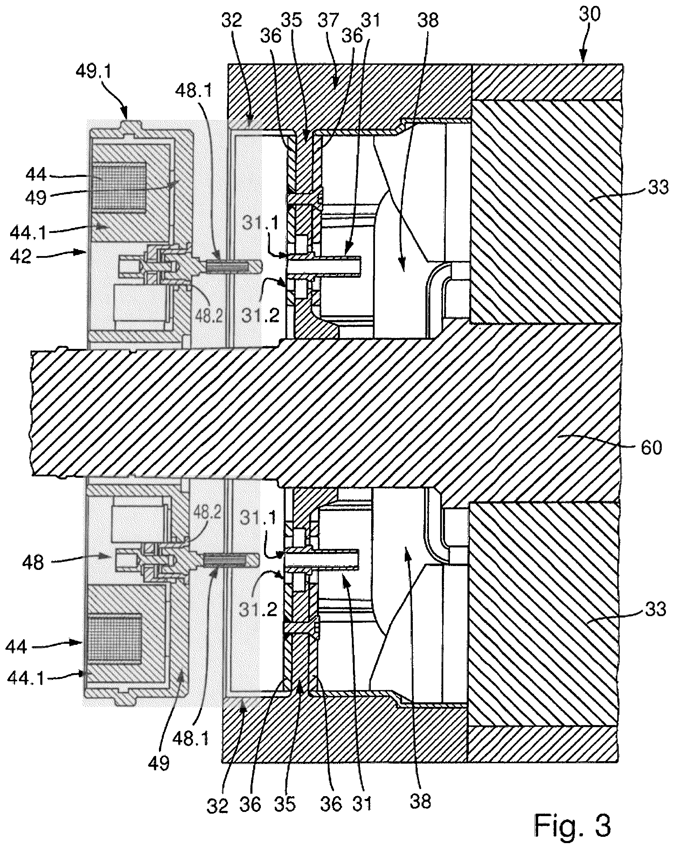

Fig. 3 zeigt das Ausführungsbeispiel der Fig. 2 im nicht-befestigten Zustand. Die in Fig. 3 dargestellte sekundärseitige zweite Vorrichtung 42 weist eine Sekundärwicklung 44 und einen U-förmigen Spulenkern 44.1 auf. Eine elektrische Verbindung mit einer Rotorwicklung 38 erfolgt über die Anschlussvorrichtungen 48 und 31. Die erste Anschlussvorrichtung 31 des Rotors 30 weist als elektrisches Kontaktglied eine Buchse 31.1 auf, die durch eine Isolierung 31.2 - beispielsweise aus Kunststoff oder Keramik - von der Wandung 35 des Rotors elektrisch isoliert ist. Die zweite Anschlussvorrichtung 48 der sekundärseitigen zweiten Vorrichtung 42 weist als elektrisches Kontaktglied einen zur Buchse 31.1 zugehörigen Stecker 48.1 auf, der durch eine weitere Isolierung 48.2 - beispielsweise aus Kunststoff oder Keramik - von der Wandung 49 der sekundärseitigen zweiten Vorrichtung 42 elektrisch isoliert ist. Die elektrischen Kontaktglieder 31.1 und 48.1 sind jeweils zueinander fluchtend positioniert.

Die Wandung 35 des Rotors 30 ist der sekundärseitigen zweiten Vorrichtung zugewandt und weist mehrere Funktionen auf. Im Ausführungsbeispiel der Fig. 3 weist die Wandung 35 eine Öffnung zur Befestigung der ersten Anschlussvorrichtung 31 auf. Vorzugsweise besteht die Wandung 35 aus einem magnetisch nicht-leitfähigen Material. Die Wandung 35 ist mit einer Schirmungsvorrichtung 36 aus magnetische leitfähigem Material zur Erhöhung der magnetischen Schirmung von Magnetfeldern vom Rotor 30 in Richtung der sekundärseitigen zweiten Vorrichtung 42 des Drehübertragers 40 versehen.

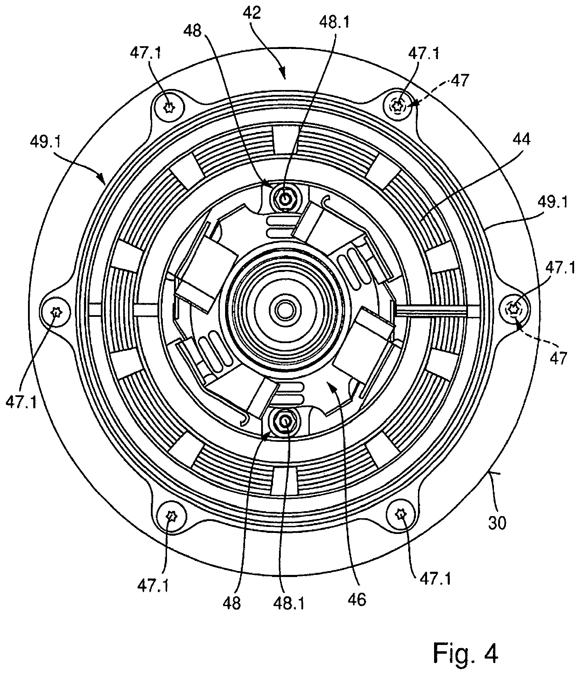

In Fig. 4 ist eine Draufsicht auf ein Ausführungsbeispiel mit einer sekundärseitigen zweiten Vorrichtung 42 schematisch dargestellt. Die sekundärseitige zweite Vorrichtung 42 ist an den Befestigungsstellen 47 mittels Schrauben 47.1 an dem Rotor 30 befestigt. Eine Sekundärwicklung 44 der sekundärseitigen zweiten Vorrichtung 42 ist an eine elektronische Schaltung 46 angeschlossen. Im Ausführungsbeispiel der Fig. 4 weist die elektronische Schaltung 46 einen Gleichrichter auf. Die Schaltung 46 ist zudem an Kontaktglieder 48.1 der Anschlussvorrichtung 48 angeschlossen. Die Ausbuchungen für die Anschraubpunkte 47 des Übertragers 40 ermöglichen in Doppelfunktion eine Wuchtung auf der Rotorendkappe 37 - entsprechend Fig. 2 - in axialer Richtung. Der Unwuchtausgleich erfolgt in einem negativen Wuchtverfahren durch Bohren oder Schleifen.

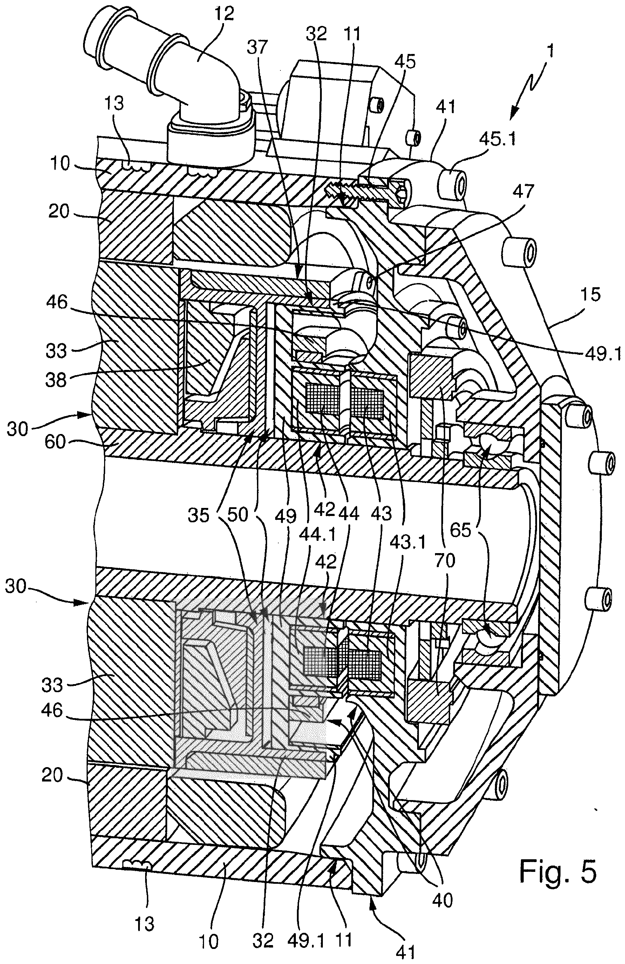

Fig. 5 zeigt ein weiteres Ausführungsbeispiel eines Elektromotors 1 in einer geschnittenen dreidimensionalen Ansicht eines Teils des Elektromotors 1. Der Elektromotor 1 weist ein Gehäuse 10 auf. Das Gehäuse 10 weist Kanäle 13 und eine Zufuhr 12 für ein flüssiges Kühlmedium (beispielsweise Wasser) auf, um die Verlustwärme des Elektromotors 1 abzuführen. Der Elektromotor 1 weist einen Stator 20 mit einem bewickelten Statorblechpaket 20, einen Rotor 30 mit einer Rotorwicklung 38 und einen Drehübertrager 40 auf. Ein Rotorblechpaket 33 des Rotors 30 ist auf einer Hohlwelle 60 befestigt. Die Hohlwelle 60 ist mittels eines Lagers 65 gelagert. Das Lager 65 ist im Ausführungsbeispiel der Fig. 5 in einer abnehmbaren Gehäuseendkappe 15 angeordnet. Ebenfalls ist in der Gehäuseendkappe 15 eine Sensorvorrichtung 70 zur Bestimmung eines Drehwinkels des Rotors 30 angeordnet.

Der Drehübertrager 40 weist zwei zueinander drehbar ausgeführte Vorrichtungen 41, 42 auf. Im Ausführungsbeispiel der Fig. 5 ist die erste Vorrichtung 41 drehfest mit dem Gehäuse 10 verbunden. Hingegen ist die zweite Vorrichtung 42 drehfest mit dem Rotor 30 verbunden. Die erste Vorrichtung 41 des Drehübertragers 40 ist primärseitig und weist eine Primärwicklung 43 auf. Die Primärwicklung 43 wird mit einem Wechselstrom bestromt. Die zweite Vorrichtung 42 des Drehübertragers 40 ist sekundärseitig und weist eine Sekundärwicklung 44 auf. Die Sekundärwicklung 44 ist an eine Schaltung 46 angeschlossen. Die Schaltung 46 ist wiederum an eine Rotorwicklung 38 angeschlossen. Die Schaltung 46 in der sekundärseitigen zweiten Vorrichtung 42 dreht sich mit dem Rotor 30 mit. Zur magnetischen Kopplung zwischen Primärwicklung 43 und Sekundärwicklung 44 weist die primärseitige erste Vorrichtung 41 einen ersten Spulenkern 43.1 und die sekundärseitige zweite Vorrichtung 42 einen zweiten Spulenkern 44.1 auf. Im Ausführungsbeispiel der Fig. 5 sind die Spulenkerne 43.1 und 44.1 U-förmig ausgebildet. Damit beide Vorrichtungen 41, 42 gegeneinander verdrehbar sind, sind beide Spulenkerne 43.1 und 44.1 durch einen Luftspalt voneinander getrennt. Jeder Spulenkern 43.1, 44.1 besteht vorzugsweise aus einer Mehrzahl von magnetisch getrennten Spulenkernteilen. Je kleiner der Luftspalt zwischen den Spulenkernen 43.1, 44.1 ist, um so höher ist die magnetische Kopplung. Geringe Toleranzen werden durch eine genaue Positionierung der primärseitigen ersten Vorrichtung 41 am Gehäuse 10 und der sekundärseitigen zweiten Vorrichtung 42 am Rotor 30 erzielt.

Das Gehäuse 10 im Ausführungsbeispiel der Fig. 5 weist als mechanische Aufnahme einen Zentriersitz 11 zur Positionierung der primärseitigen ersten Vorrichtung 41 auf. Die primärseitige erste Vorrichtung 41 weist im Ausführungsbeispiel der Fig. 5 eine Anzahl erster Befestigungsstellen 45 zur kraftschlüssigen und formschlüssigen Befestigung an dem Gehäuse 10 mittels der Schrauben 45.1 auf.

Der Rotor 30 weist als zweite Aufnahme einen zweiten Zentriersitz 32 zur Positionierung der sekundärseitigen zweiten Vorrichtung 42 auf. Der zweite Zentriersitz ist dabei in einer Rotorendkappe 37 des Rotors 30 ausgebildet. Die sekundärseitige zweite Vorrichtung 42 weist eine Anzahl zweiter Befestigungsstellen 47 zur kraftschlüssigen und formschlüssigen Befestigung an dem Rotor 30 auf.

Dabei weist der zweite Zentriersitz 32 eine Kontaktfläche zwischen Rotor 30 und der sekundärseitigen zweiten Vorrichtung 42 des Drehübertragers 40 auf. Im Ausführungsbeispiel der Fig. 5 ist die Kontaktfläche zylindrisch ausgebildet. Alternativ ist eine konische oder doppelkonische Kontaktfläche vorgesehen.

Der zweite Zentriersitz 32 verhindert eine radiale Verschiebung der sekundärseitigen zweiten Vorrichtung 42 des Drehübertragers 40 gegenüber dem Rotor 30. Hiermit wird für den Rotor 30 und die sekundärseitige zweite Vorrichtung 42 des Drehübertragers 40 eine sehr hohe axiale Steifheit und Zentrierung (Rundlauf) erzielt. Somit reduzieren sich signifikant in verschiedenen Betriebszuständen Vibrationen oder azentrischer Lauf durch Schwerpunktsverlagerungen.

Durch die Befestigung der Vorrichtungen 41 und 42 mittels der Befestigungsstellen 45 und 47 wird zudem eine axiale Verschiebung zwischen primär- und sekundärseitiger Vorrichtung 41, 42 des Drehübertragers 40 verhindert, so dass der Luftspalt zwischen den Spulenkernen 43.1, 44.1 eng toleriert ausgelegt werden kann.

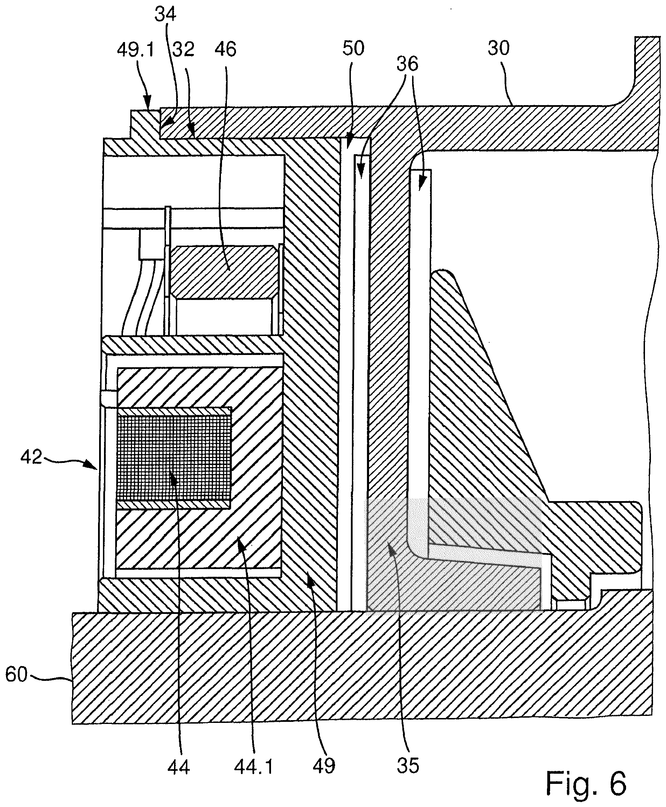

Eine Detailansicht des Elektromotors 1 aus Fig. 5 ist in Fig. 6 dargestellt. Ein Bund 49.1 eines Gehäuses 49 der sekundärseitigen zweiten Vorrichtung 42 und eine Kante 34 des Rotors 30 legen eine Breite eines Luftspaltes 50 zwischen dem Gehäuse 49 der sekundärseitigen zweiten Vorrichtung 42 und einer Wandung 35 des Rotors 30 fest. Der Luftspalt 50 wirkt als Wärmewiderstand und reduziert eine Erwärmung der sekundärseitigen zweiten Vorrichtung 42 durch Wärme des Rotors 30 signifikant. Hierdurch wird wirksam verhindert, dass die Schaltung 46 über eine zulässige Temperatur hinaus erhitzt wird. Die sekundärseitige zweite Vorrichtung 42 ist von der Welle 60 beabstandet. Im Ausführungsbeispiel der Fig. 5 sind an der Wandung 35 des Rotors 30 zudem zwei magnetische Schirmungsvorrichtungen 36 befestigt.

Die Erfindung ist nicht auf die dargestellten Ausgestaltungsvarianten der Figuren 1 bis 6 beschränkt. Beispielsweise ist es möglich, einen anderen konstruktiven Aufbau des Drehübertragers vorzusehen. Auch kann die Erfindung für einen anderen Elektromotortyp verwendet werden. Der Elektromotor 1 gemäß dem Ausführungsbeispiel der Fig. 5 kann besonders vorteilhaft für ein elektrisch betriebenes Kraftfahrzeug verwendet werden.

### Bezugszeichenliste

- 1: Elektromotor, Synchronmotor
- 10: Gehäuse
- 11: Aufnahme, Zentriersitz
- 12: Kühlmediumzufuhr
- 13: Kühlmediumkanal
- 15: Gehäuseendkappe
- 20: Stator, bewickeltes Statorblechpaket
- 30: Rotor
- 31: Anschlussvorrichtung
- 31.1: elektrisches Kontaktglied, Metallbuchse
- 31.2: Isolatorvorrichtung
- 32: Aufnahme, Zentriersitz
- 33: Rotorblechpaket
- 34: Kante
- 35: Wandung
- 36: magnetische Schirmung
- 37: Rotorendkappe
- 38: Rotorwicklung, Spule
- 40: Drehübertrager
- 41: erste primärseitige Vorrichtung des Drehübertragers
- 42: zweite sekundärseitige Vorrichtung des Drehübertragers
- 43: Primärwicklung
- 43.1: primärseitiger Spulenkern
- 44: Sekundärwicklung
- 44.1: sekundärseitige Spulenkern
- 45: Befestigungsstelle, Schraubloch
- 46: Schaltung, Gleichrichter
- 47: Befestigungsstelle, Schraubloch
- 48: Anschlussvorrichtung
- 48.1: elektrisches Kontaktglied, Stecker
- 48.2: Isolatorvorrichtung
- 49: Wandung
- 49.1: Bund
- 50: Wärmewiderstand, Luftspalt
- 60: Welle, Hohlwelle
- 65: Lager
- 70: Sensorvorrichtung

## Patentansprüche

1. Elektromotor (1),
- mit einem Gehäuse (10),
- mit einem Stator (20),
- mit einem Rotor (30) und
- mit einem Drehübertrager (40),
- bei dem der Drehübertrager (40) eine primärseitige erste Vorrichtung (41) mit einer Primärwicklung (43) und eine sekundärseitige zweite Vorrichtung (42) mit einer Sekundärwicklung (44) aufweist,
- bei dem das Gehäuse (10) eine erste Aufnahme (11) zur Positionierung der primärseitigen ersten Vorrichtung (41) aufweist,
- bei dem die primärseitige erste Vorrichtung (41) eine Anzahl erster Befestigungsstellen (45) zur kraftschlüssigen und/oder formschlüssigen Befestigung an dem Gehäuse (10) aufweist,
**wobei** der Rotor (30) eine zweite Aufnahme (32), **von welcher die sekundärseitige zweite Vorrichtung (42) positioniert ist,** aufweist,
**wobei** die sekundärseitige zweite Vorrichtung (42) eine Anzahl zweiter Befestigungsstellen (47)**, welche kraftschlüssig und/oder formschlüssig an dem Rotor (30) befestigen,** aufweist,
**wobei** der Rotor (30) eine erste Anschlussvorrichtung (31) und die sekundärseitige zweite Vorrichtung (42) eine zweite Anschlussvorrichtung (48) zur elektrischen Verbindung des Rotors (30) mit der sekundärseitigen zweiten Vorrichtung (42) aufweisen, wobei die erste Anschlussvorrichtung (31) erste elektrische Kontaktglieder (31.1) und die zweite Anschlussvorrichtung (48) zweite elektrische Kontaktglieder (48.1) zur lösbaren Leitungsverbindung mittels Formschluss und/oder Kraftschluss aufweisen,
wobei die ersten Befestigungsstellen und die zweiten Befestigungsstellen zur zerstörungsfrei lösbaren Befestigung als Öffnungen (45, 47) zur Schraubbefestigung ausgebildet sind,
**dadurch gekennzeichnet, dass**
ein Luftspalt (50) zur Ausbildung eines Wärmewiderstands zwischen dem Rotor (30) und der sekundärseitigen zweiten Vorrichtung (42) des Drehübertragers (40) angeordnet ist,
wobei die sekundärseitige zweite Vorrichtung (42) einen Bund (49.1) aufweist, der mit einer zugehörigen Kante (34) des Rotors (30) die Position der sekundärseitigen zweiten Vorrichtung (42) in axialer Richtung definiert,
wobei die zweite Aufnahme des Rotors (30) zur Positionierung der sekundärseitigen zweiten Vorrichtung (42) als Zentriersitz (32) ausgebildet ist,
wobei der Bund (49.1) derart angeordnet ist, dass eine dem Rotor (30) zugewandte Wandung (49) der sekundärseitigen zweiten Vorrichtung (42) vom Rotor (30) beabstandet ist,
wobei die erste Anschlussvorrichtung (31) eine in einer Wandung (35) des Rotors (30) befestigte erste Isolatorvorrichtung (31.2) zur elektrischen Isolation der ersten elektrische Kontaktglieder (31.1) aufweist,
und wobei die zweite Anschlussvorrichtung (48) eine in der Wandung (49) der sekundärseitigen zweiten Vorrichtung (42) befestigte zweite Isolatorvorrichtung (48.2) zur elektrischen Isolation der zweiten elektrischen Kontaktglieder (48.1) aufweist.

2. Elektromotor (1) nach Anspruch 1,
**dadurch gekennzeichnet**,
**ein Luftspalt** (50) durch eine dem Rotor (30) zugewandte Wandung (49) der sekundärseitigen zweiten Vorrichtung (42) und eine der sekundärseitigen zweiten Vorrichtung (42) zugewandte Wandung (35) des Rotors (30) begrenzt ist.

## Claims

1. Electric motor (1)
- comprising a housing (10),
- comprising a stator (20),
- comprising a rotor (30) and
- comprising a rotary transformer (40),
- in which the rotary transformer (40) comprises a primary-side first device (41) having a primary winding (43), and a secondary-side second device (42) having a secondary winding (44),
- in which the housing (10) comprises a first slot (11) for positioning the primary-side first device (41),
- in which the primary-side first device (41) comprises a plurality of first fastening sites (45) for frictional and/or interlocked fastening to the housing (10),
wherein the rotor (30) comprises a second slot (32), by which the secondary-side second device (42) is positioned,
wherein the secondary-side second device (42) comprises a plurality of second fastening sites (47) that frictionally and/or interlockingly fasten to the rotor (30),
wherein the rotor (30) comprises a first connection device (31) and the secondary-side second device (42) comprises a second connection device (48) for electrically connecting the rotor (30) to the secondary-side second device (42), wherein the first connection device (31) comprises first electrical contact members (31.1) and the second connection device (48) comprises second electrical contact members (48.1) for releasable line connection by means of interlocking and/or a frictional fit,
wherein the first fastening sites and the second fastening sites are designed as openings (45, 47) for screw fastening for the purpose of non-destructive and releasable fastening,
**characterised in that**
an air gap (50) is arranged between the rotor (30) and the secondary-side second device (42) of the rotary transformer (40) to form thermal resistance,
wherein the secondary-side second device (42) comprises a shoulder (49.1) which, together with an associated edge (34) of the rotor (30), determines the position of the secondary-side second device (42) in the axial direction,
wherein the second slot in the rotor (30) is designed as a centring seat (32) for positioning the secondary-side second device (42),
wherein the shoulder (49.1) is arranged such that a wall (49) of the secondary-side second device (42) facing the rotor (30) is at a distance from the rotor (30),
wherein the first connection device (31) comprises a first insulator device (31.2) fastened in a wall (35) of the rotor (30) for electrically insulating the first electrical contact members (31.1),
and wherein the second connection device (48) comprises a second insulator device (48.2) fastened in the wall (49) of the secondary-side second device (42) for electrically insulating the second electrical contact members (48.1).

2. Electric motor (1) according to claim 1,
**characterised in that**
an air gap (50) is defined by a wall (49) of the secondary-side second device (42) facing the rotor (30), and by a wall (35) of the rotor (30) facing the secondary-side second device (42).

## Revendications

1. Moteur électrique (1) comprenant
- un carter (10),
- un stator (20),
- un rotor (30) et
- un transformateur rotatif (40),
- ledit transformateur rotatif (40) incluant un premier dispositif (41) situé côté primaire, muni d'un enroulement primaire (43), et un second dispositif (42) situé côté secondaire et doté d'un enroulement secondaire (44),
- ledit carter (10) étant pourvu d'un premier logement (11) dédié au positionnement dudit premier dispositif (41) situé côté primaire,
- lequel premier dispositif (41), situé côté primaire, présente un certain nombre de premières zones de fixation (45) en vue de la fixation audit carter (10), instaurée par engagement positif et/ou par complémentarité de formes,
sachant que le rotor (30) comporte un second logement (32), qui assure le positionnement dudit second dispositif (42) situé côté secondaire,
lequel second dispositif (42), situé côté secondaire, présente un certain nombre de secondes zones de fixation (47) qui assurent une fixation au rotor (30), instaurée par engagement positif et/ou par complémentarité de formes,
sachant que le rotor (30) et le second dispositif (42) situé côté secondaire sont équipés, respectivement, d'un premier dispositif de raccordement (31) et d'un second dispositif de raccordement (48) affecté à la connexion électrique dudit rotor (30) avec ledit second dispositif (42) situé côté secondaire, lesquels premier dispositif de raccordement (31) et second dispositif de raccordement (48) sont dotés, respectivement, de premiers organes (31.1) de mise en contact électrique et de seconds organes (48.1) de mise en contact électrique, en vue de la jonction libérable de conducteurs établie par complémentarité de formes et/ou par engagement positif,
sachant que les premières zones de fixation et les secondes zones de fixation sont réalisées sous la forme d'orifices (45, 47) dévolus à la fixation par vissage, en vue de la fixation libérable exempte de destruction,
**caractérisé par le fait**
**qu'**un entrefer (50) est réservé entre le rotor (30) et le second dispositif (42) situé côté secondaire du transformateur rotatif (40), en vue de former une résistance thermique,
le second dispositif (42) situé côté secondaire étant muni d'une collerette (49.1) définissant, avec une arête associée (34) du rotor (30), l'emplacement que ledit second dispositif (42), situé côté secondaire, occupe dans le sens axial,
le second logement dudit rotor (30) étant réalisé sous la forme d'un siège de centrage (32), en vue du positionnement dudit second dispositif (42) situé côté secondaire,
ladite collerette (49.1) étant disposée de telle manière qu'une paroi (49) du second dispositif (42) situé côté secondaire, tournée vers le rotor (30), soit placée à distance dudit rotor (30),
sachant que le premier dispositif de raccordement (31) est doté d'un premier dispositif isolateur (31.2) fixé dans une paroi (35) dudit rotor (30), en vue de l'isolation électrique des premiers organes (31.1) de mise en contact électrique,
et sachant que le second dispositif de raccordement (48) est muni d'un second dispositif isolateur (48.2) fixé dans la paroi (49) dudit second dispositif (42) situé côté secondaire, en vue de l'isolation électrique des seconds organes (48.1) de mise en contact électrique.

2. Moteur électrique (1) selon la revendication 1,
**caractérisé par le fait**
**qu'**un entrefer (50) est délimité par une paroi (49) du second dispositif (42) situé côté secondaire, tournée vers le rotor (30), et par une paroi (35) dudit rotor (30) qui pointe vers ledit second dispositif (42) situé côté secondaire.
